# EUROPEAN PATENT APPLICATION

(11) **EP 3 851 901 A1**
(43) Date of publication of application: **21.07.2021**
(21) Application number: 20305025.7
(22) Date of filing: 15.01.2020
(51) Int. Cl.: G02C 9/04, G02C 13/00, B24B 9/14

(54) **METHOD FOR GENERATING CLIP-ON DEVICE MANUFACTURING DATA**

(71) Applicant: ESSILOR INTERNATIONAL, 94220 Charenton-Le-Pont (FR)
(72) Inventor: JORET, Paul, CHARENTON LE PONT (FR); AMIR, Bruno, 94220 CHARENTON LE PONT (FR)
(74) Representative: Plasseraud IP

(57) **Abstract**

Method for generating clip-on device manufacturing data comprising the following steps:
a. providing a plurality of eyeglass frames,
b. selecting one frame among the plurality of eyeglass frames,
c. obtaining data related to the selected frame, preferably data comprising geometric data, color data and texture data, and
d. generating clip-on device manufacturing data based on the obtained data related to the selected frame for manufacturing a clip-on device which can be clipped on the selected frame.

## Description

The present invention relates to the field of eyewear and more specifically to the field of personalized eyewear.

It is known to manufacture and provide a clear eyewear together with a removable clip-on device which can be attached on the eyewear so as to provide it with a solar filter and temporally transform the clear eyewear into a solar eyewear.

Typically, such clips can be attached by a magnet which is incorporated into the eyewear.

In case of known solutions, the clip-on device must be provided together with the eyeglass frame. Indeed, the known means for fixing the clip-on device in a removable way include components on both the eyeglass frame and on the clip-on device which are to cooperate, e.g. a magnet. Furthermore, the clip-on device must have the same geometry than the existing frame so as to precisely cooperate in order not to hinder the wearer's vision and in an aesthetic way.

The existing solutions do not allow to personalize an existing eyewear deprived of clip-on device so as to provide it with a clip-on device.

There is thus a need to provide a clip-on device which can adapt to an existing eyewear while preserving the eyewear design and esthetics, and that provide easy and performant attaching means.

To that end, the present invention provides a method for generating clip-on device manufacturing data comprising the following steps:
a. providing a plurality of eyeglass frames,
b. selecting one frame among the plurality of eyeglass frames,
c. obtaining data related to the selected frame, preferably data comprising geometric data, color data and texture data, and
d. generating clip-on device manufacturing data based on the obtained data related to the selected frame for manufacturing a clip-on device which can be clipped on the selected frame.

Clip-on device manufacturing data designate any information which can be used by a clip-on device manufacturer so as to manufacture a clip-on device. Typically, it comprises geometrical data and attaching means data.

In a particular embodiment, the method according to the disclosure provides in a fully automated manner a clip-on device fully or partially customized to an eyeglasses frame.

In particular, steps (c) and (d), are fully automated; the obtaining and generating being thus done using at least one processor to generate clip-on device manufacturing data adapted to be used to manufacture a clip-on device which can be clipped on the selected frame.

Step a and b allow providing a pre-existing eyeglass frame. The pre-existing eyeglass frame can be an eyeglass frame which has already been used and has corresponding lenses designed to correct vision. In that case, the plurality of eyeglass frames among which the one selected framed is selected corresponds to the plurality of preexisting eyeglass frames among which the user chose the eyeglass she/he wanted to add a clip-on device to.

Alternatively, the pre-existing eyeglass frame can be a new eyeglass frame which is chosen among a plurality of eyeglass frame e.g. at an optician store, or on a catalogue. In that case, at the time of its selection, the eyeglass frame can be wearing a mere demonstration lens which is not designed for correcting the wearer's vision. In case it is chosen on a catalogue, the eyeglass wear can even have no materiality at the time step b is performed.

At least one of the eyeglass frames provided among the plurality of eyeglass frames of step a can be a digital frame.

Using a digital frame as a starting point allows saving material, which can be particularly critical in case of expensive eyeglass frames.

At least one of the eyeglass frames provided among the plurality of eyeglass frames of step a can be a physical frame.

Using a physical frame can allow a more accurate and sure choice for the wearer. It can also allow actually trying the eyeglass frame.

At least one of the eyeglass frames provided among the plurality of eyeglass frames of step a can be a picture of a frame.

Such picture can be provided by a user and come from any source such as a magazine or a movie.

The plurality of eyeglass frames of step a can of course comprise any combination of digital frames, physical frames, and picture of frames.

Step d can comprise a substep d1 consisting in determining whether the clip-on device which can be clipped on the selected frame is to be clipped with magnetic means or with hooks.

Of course, alternative means can be used for attaching the clip-on device to the selected frame. However, magnets have the advantage to be discreet and can be used on metallic frames whereas hooks can adapt to a wider variety of frames.

In order to determine which attaching means is best suited, step d1 can be performed while taking into account the eyewear material and geometry.

Step d can also comprise a substep consisting in determining a bidimensional shape of the clip-on device which can be clipped on the selected frame. The bidimensional shape is critical because the bidimensional projection of the frame and/or the clip-on device corresponds to what is seen by a person standing in front of the wearer of corresponding eyewear. As such, not only is such substep be critical for allowing a proper eyewear coverage and suitable fixation, it is also critical so as to preserve the general identity and design of the frame.

Step d can also comprise a substep consisting in determining an optimal transmittance of the clip-on device which can be clipped on the selected frame. Such determination can depend on the transmittance of the original eyeglass frame and/or on the luminosity the frame is expected to be exposed. It is possible to provide a set of clip-on devices for a single eyewear with a variety of transmittances for different amounts of luminosity.

Although the clip-on device is preferably a clip-on device for transforming a clear eyewear into a solar eyewear, it can also be a clip-on device for changing the overall vision correction of the eyewear. This can be useful for transforming a regular solar eyewear into a vision corrective solar eyewear, to implement vision correction on a 3D cinema eyewear, or to be able to provide a vision correction eyewear which can e.g. be shared by several wearers by tuning the correction.

Step d can also comprise a substep consisting in generating carving data. Such carving data can allow optimizing the compatibility between the clip-on device to be manufactured and the selected eyewear.

Step d can also comprise a substep consisting in determining at least one suitable coating for the clip-on device which can be clipped on the selected frame. Such coating can be an optical filter, preferably a UV filter, an anti-reflection coating, a hydrophobic coating, an anti-scratching coating etc. It can be applied by any means.

In a preferred embodiment, the obtained data related to the selected frame comprises geometric data including an external contour of the frame, a base curve of the frame and/or a pantoscopic angle: the clip-on manufacturing data are thus generated so that the clip-on device would present the same external contour than the frame, the same base curve than the frame, and/or the same pantoscopic angle than the frame.

Likewise, the obtained data related to the selected frame can comprise color data and/or texture data, in which case the clip-on manufacturing data are generated so that the clip-on device would present the same color and/or texture than the selected frame.

In both case, it allows for a better match of the clip-on device on the selected frame. Indeed, a clip-on device with the same contour, base curve or pantoscopic angle will have a better adherence on the frame, and a clip-on device with the same color and/or texture than the selected frame will be more discrete and/or aesthetical.

Preferably, the clip-on device which can be clipped on the selected frame is a solar clip-on device.

The invention can be better understood at the reading of the detailed examples below, which constitute non-limitative embodiments of the present invention and at the examining of the annexed drawing, on which:
- figure 1 shows an eyewear with an important face form angle with and without corresponding clip-on device,
- figure 2 shows a clip-on device cooperating with an eyeglass through a system of protrusions and holes, and
- figure 3 shows a clip-on device cooperating with an eyeglass frame through a clipping leaf-spring system.

The present example consists in a process for generating clip-on device manufacturing data. An existing eyewear is first provided.

The processor(s) within the terms of the disclosure may comprise dedicated hardware as well as hardware capable of executing software in association with appropriate software. This may consist in a single dedicated processor, a single shared processor, or a plurality of individual processors, some of which may be shared. Moreover, explicit use of the term "processor" should not be construed as referring exclusively to hardware capable of executing software, but refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as e.g. an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

A computer-implemented method according to the disclosure is for providing a clip-on to fix on an eyeglasses frame.

In a particular embodiment, the method according to the disclosure provides in a fully automated manner clip-on device manufacturing data to provide or manufacture a clip-on device fully or partially customized to a given eyeglasses frame.

Firstly, the existing frame design features is obtained for an eyeglasses frame. Such design features comprise at least the frame shape, the lens shape, bridge shape, and the frame face form angle.

A crucial parameter is the outer frame contour. This contour is used so that the clip-on device shape matches the frame contour. The clip-on device contour can be slightly bigger, but it must not be smaller so as to hide the frame when the clip-on device is worn. The outer contour can be obtained from a smartphone camera combined with image processing techniques to extract the contour.

It is also possible to use the 3D files giving all frame model numerical datas if available from the frame manufacturer.

Another key parameter is the face form angle, which is used so that the face form angle of the clip-on device matches the face form angle of the frame, which will allow keeping reasonable the overall thickness of the clip-on device combined with the frame.

The face form angle can be determined by any smartphone camera, or directly from numerical data if available.

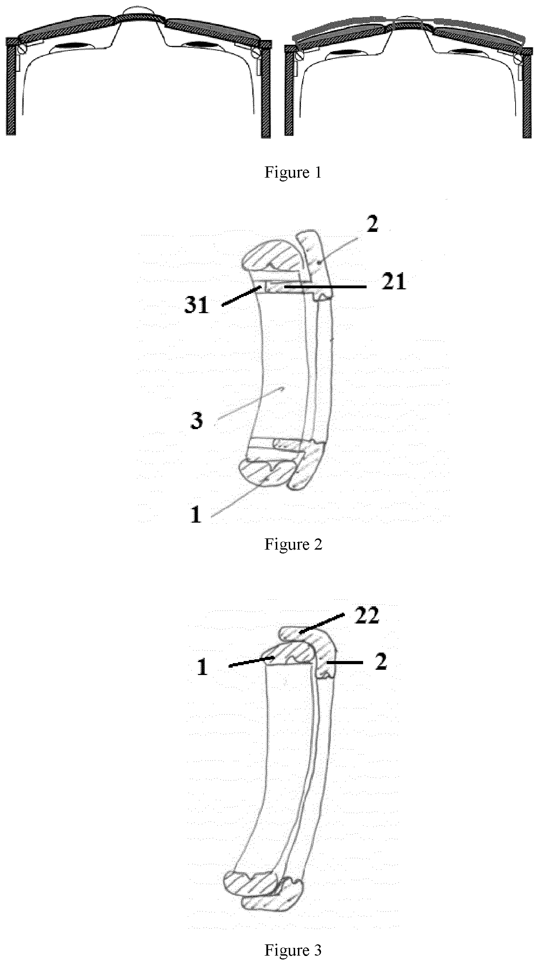

The face form angle is defined by norm ISO8624 and corresponds to the angle in the horizontal plane between the plane of the spectacle front and the plane of the left or right lens shape. Figure 1 shows a frame with an important face form angle with and without a corresponding clip-on device which has corresponding face form angle.

Optionally other parameters can be obtained such as the frame color(s), its material, decorative pattern, its transparency, its opacity, the frame edge thickness, or its base curve.

These parameters may be determined from an available numerical model of the frame, which can be obtained from the frame model name or brand.

It can also be obtained directly from a picture of the wearer current equipment, e.g. a photo taken by a smartphone.

These parameters are chosen to ensure the clip-on device has the same aesthetics and identity than the frame when placed on the frame, ie the clip-on device must to present a similar frame shape, and the global thickness of the combination of the frame and of the clip-on device must be minimized.

The frame and the clip-on device may present a similar outer shape but a different inner shape: different color, solar lens etc.

The wanted features of the clip-on device are then selected.

The wearer can select an optical functionality such as the clip-on device comprising polar lens, solar lens, blue cut lens, etc. The wearer can also select a dioptric functionality, e.g. a removable additional power lens for reading.

The wearer can also select design features for the clip on device. Such features can be selected from color, edge thickness, inner shape (i.e. lens shape), decorative element etc.

An additional parameter is then selected which will be used for defining means for attaching the clip-on device to the eyewear.

This attaching mean parameter can be set up by default depending on the frame design parameters or selected by the wearer out of different possible parameters. This parameter can be selected from attaching the clip-on device on the bridge of the frame, attaching the clip-on device on the frame or lens edge, attaching the clip-on device on the hinge, or attaching the clip-on device on any magnetic part, e.g. steel part pre-existing on the frame or on the lens. Any other means for attaching the clip-on device can be used such as e.g. hooks configured to grip the bridge on the frame edge and so on.

The clip-on device may include positioning means so that to ensure the clip-on device is correctly superposed to the frame. For instance, the clip-on device periphery may include an edge shape that will contact the outer frame shape , so as to ensure correct positioning.

Figure 2 shows a clip-on device 2 which is clipped on a frame 1 thanks to protrusions 21 which cooperate with holes 3 1 in the lens 3 carried by the frame 1.

Figure 3 shows a different mechanism on which the clip-on device 2 cooperates with the external contour of the frame 1. The edges 22 of the clip-on device can consist in a leaf spring so as to ensure a good cooperation.

Additional frame information may be needed at this stage and obtained consequently such as the location, if any, of magnetic material parts on the frame or on the lens, that will cooperate with magnetic material in the clip-on device. In case of magnetic part on the lens, it can be a simple choice of the wearer as the lens can be design post facto. Similarly, the wearer can be offered to include holed, slots, rim in the lens that would be to participate to the attaching means. Other additional information which may be needed include the position and geometry of the hinge in case it participates to the attaching means.

The clip-on device manufacturing data are then generated. The clip-on device geometry is determined based on all these parameters the obtained geometry is shown to the wearer for validation or modification.

During the geometry generation, the clip-on base curve is preferably determined to match the frame or the lens frame base curve, in order to minimize the distance between the frame.

Similarly, the lens base curve is preferably determined as close as possible to the frame lens base curve or frame base curve. Any contact between the frame lens and the clip-on device lens is to be avoided so as to prevent any scratching of the lenses. The clip-on thickness and the clip-on lens thickness are preferably minimized, e.g. kept under 1.5 mm.

The clip-on device face form angle is chosen as similar as possible as the frame face form angle.

The attachment mean are also properly positioned on the clip-on device at that stage.

Several parameters can be selected and modified interactively with the help of the wearer. Such parameters include the inner frame contour of the clip-on device, its thickness, the clip-on device lens characteristics, the color, pattern, and transparency of the clip-on device etc.

The clip-on device is then manufactured based on these manufacturing data, e.g. using a customized process.

The clip-on device is manufactured from the determined geometry, based on customized parameters.

Preferably, the clip-on device is manufactured using additive manufacturing for the rim, although other technologies can be used.

The method according to the invention is preferably computer-implemented. Namely, a computer program product comprises one or more sequences of instructions that are accessible to a processor which may be the above-mentioned at least one processor and that, when executed by the processor, cause the processor to carry out steps of the method for providing a clip-on device as described above.

The method according to the disclosure may be implemented in a calculation engine. Namely, the above-mentioned at least one processor comprises software and/or hardware making it possible, whatever the modification(s) requested by the user on any item or in any location or region or area of the clip-on, to automatically perform instantaneous recalculation of all the parameters and variables of the clip-on, including parameters the modification of which is not requested by the user, but which are modified as a consequence of the modification(s) requested by the user.

The lens can be manufactured with any known technique. Preferably, it is also manufactured using additive manufacturing.

## Claims

1. Method for generating clip-on device manufacturing data comprising the following steps:
a. providing a plurality of eyeglass frames,
b. selecting one frame among the plurality of eyeglass frames,
c. obtaining data related to the selected frame, preferably data comprising geometric data, color data and texture data, and
d. generating clip-on device manufacturing data based on the obtained data related to the selected frame for manufacturing a clip-on device which can be clipped on the selected frame.

2. Method according to claim 1, wherein step d comprises a substep d1 consisting in determining whether the clip-on device which can be clipped on the selected frame is to be clipped with magnetic means or with hooks

3. Method according to any of claim 1 or 2, wherein step d comprises a substep consisting in determining a bidimensional shape of the clip-on device which can be clipped on the selected frame.

4. Method according to any which one of the preceding claims, wherein step d comprises a substep consisting in determining an optimal transmittance of the clip-on device which can be clipped on the selected frame.

5. Method according to any which one of the preceding claims, wherein the obtained data related to the selected frame comprises geometric data including an external contour of the frame, a base curve of the frame and/or a pantoscopic angle, and wherein the clip-on manufacturing data are generated so that the clip-on device would present the same external contour than the frame, the same base curve than the frame, and/or the same pantoscopic angle than the frame.

6. Method according to any which one of the preceding claims, wherein the obtained data related to the selected frame comprises color data and/or texture data and wherein the clip-on manufacturing data are generated so that the clip-on device would present the same color and/or texture than the selected frame.

7. Method according to any which one of the preceding claims, wherein step d comprises a substep consisting in generating carving data.

8. Method according to any which one of the preceding claims, wherein step d comprises a substep consisting in determining at least one suitable coating for the clip-on device which can be clipped on the selected frame.

9. Method according to any which one of the preceding claims, wherein at least one of the eyeglass frames provided among the plurality of eyeglass frames of step a is a digital frame.

10. Method according to any which one of the preceding claims, wherein at least one of the eyeglass frames provided among the plurality of eyeglass frames of step a is a physical frame.

11. Method according to any which one of the preceding claims, wherein at least one of the eyeglass frames provided among the plurality of eyeglass frames of step a is a picture of a frame.

12. Method according to any which one of the preceding claims, wherein the clip-on device which can be clipped on the selected frame is a solar clip-on device.
